# EUROPÄISCHE PATENTANMELDUNG

(11) **EP 3 125 165 A1**
(43) Veröffentlichungstag der Anmeldung: **01.02.2017**
(21) Anmeldenummer: 16020290.9
(22) Anmeldetag: 29.07.2016
(51) Int. Cl.: G06Q 10/06, G06Q 50/12

(54) **DRIVE-IN MOTEL ZUR ANONYMEN NUTZUNG UND ANMIETUNG DER ZIMMER**

(30) Priorität: 31.07.2015 DE 102015009716
(71) Anmelder: Ritzenberger, Peter, 90475 Nürnberg (DE)
(72) Erfinder: Ritzenberger, Peter, 90475 Nürnberg (DE)
(74) Vertreter: Dreykorn-Lindner, Werner

(57) **Zusammenfassung**

1. Drive-in Motel zur anonymen Nutzung und Anmietung der Zimmer.
2.1 Es sind unterschiedlich ausgestaltete Hotels, Motels und Bewirtungsbetriebe bekannt. Jedoch fehlt in der Praxis eine Ausgestaltung, bei welcher die Anonymität des Kunden weitgehend gewahrt bleibt.
2.2 Um dies zu ermöglichten, weist das Motel einen Check-in Bereich (CI) und einen Check-out Bereich (CO) auf, welcher als ein nicht einsehbarer Baukörper mit jeweils zwei Toren (E1, E2 und A1, A2) in Durchfahrtsrichtung ausgestaltet ist. Check-in (CI), Check-out Bereich (CO) sind über einen Zufahrtsweg miteinander verbunden. Der Gast fährt in den Check-in Bereich (CI) ein und das erste Tor (E1) des Check-in Bereichs (CI) schließt sich. Nun wählt der Gast vom Auto aus über eine Bedienungseinrichtung ein freies Zimmer (Z01, Z02, ..., Z14) aus, die eingegebenen Kundendaten sowie Daten von installierten Überwachungseinrichtungen werden als Kundendatensatz in einem Abrechnungssystem gespeichert und danach öffnen sich das zweite Tor (E2) des Check-in Bereichs (CI) und das Tor (S01, ... S14) der ausgewählten Garage (G01, G02, ..., G14). Nach Einfahrt in die Garage (G01, G02, ..., G14) schließt sich das jeweilige Tor (S01, ... S14) wieder und es besteht ein direkter Zugang (T01, T02, ..., T14) vom Auto zum Zimmer (Z01, Z02, ..., Z14). Bei der Abreise und nach Rechnungslegung und Bezahlung wird das zweite Tor (A2) im Check-out Bereich (CO) geöffnet, der Gast fährt aus und der gespeicherte Kundendatensatz wird automatisch gelöscht, wobei sich während der Fahrt im Check- in Bereich (CI) oder Check-out Bereich (CO) jeweils immer nur ein Fahrzeug befindet und wobei ein Zugriff des Motelpersonals auf den jeweiligen Kundendatensatz nicht möglich ist.
2.3 Die Erfindung liegt auf dem Gebiet eines Hotelmanagementsystems in Verbindung mit der baulichen Ausgestaltung eines Hotels, Motels oder Bewirtungsbetriebs.

Zur Veröffentlichung wird FIG. 1 vorgeschlagen.

## Beschreibung

Die Erfindung betrifft, gemäß dem Patentanspruch 1 ein Drive-in Motel zur anonymen Nutzung und Anmietung der Zimmer.

Ein Hotel ist ein Beherbergungs- und Verpflegungsbetrieb für Gäste gegen Bezahlung. Hierfür benötigt das Hotel Kundendaten zur Durchführung hotelintemer Abläufe und für kundenbezogene Vorgänge, wie Leistungserfassung, etwa im Restaurant oder in der Hotelbar. Um Kundendaten eines Hotelgastes vor unerwünschter und unerlaubter Einsichtnahme oder Nutzung durch dritte Personen zu schützen, ist aus der DE 10 2013 109 045 A1 ein Hotelmanagementsystem bekannt, welches eine Anzahl an verschiedenen Kontaktpunkten installierter Terminals mit biometrischen Scanner, beispielsweise Fingerabdruck-Scannern zum Zurverfügungstellung eines biometrischen Datensatzes durch einen Hotelgast, umfasst. Die Terminals sind mit einer Kundendatenbank mit biometrischer Verschlüsselung sowie mit einer Leistungs- und Abrechnungsdatenbank verbunden. Bei einer Check in-Prozedur erfolgt in einem ersten Erfassungsschritt eine Erfassung des biometrischen Datensatzes des Hotelgastes durch den Scanner. Ist der Hotelgast bisher nicht erfasst, erfolgt anschließend in einem zweiten Eufassungsschritt eine Erfassung der Kundendaten und die Eingabe der Kundendaten in das Hotelmanagementsystem durch den Hotelgast und/oder einen Hotelmitarbeiter an dem Terminal zur Erstellung eines Kundendatensatzes. In einem anschließenden Einstellungsschritt nimmt der Hotelgast an dem Terminal die Sicherheitseinstellungen vor, mit denen er festlegt, an welchem Kontaktpunkt welche seiner Kundendaten für Dritte sichtbar sein sollen. Nach Abschluss der Erfassungen bzw. Einstellungen werden diese in der Kundendatenbank und in der Leistungs- und Abrechnungsdatenbank in einem abschließenden Schritt gespeichert. Bei der Check out-Prozedur erfolgt zunächst erneut eine Erfassung der biometrischen Daten des Hotelgastes durch einen am Check out-Terminal angebrachten Scanner. Wird der Hotelgast anhand seiner biometrischen Daten erkannt, wird in einem Rechnungsstellungsschritt unter Bereitstellung der entsprechenden Konsumdaten aus der Leistungs- und Abrechnungsdatenbank sowie der Kundendaten aus der Kundendatenbank die Rechnungsstellung vorgenommen. Die Rechnungsstellung erfolgt dabei jedoch erst, nachdem unter Verwendung der biometrischen Daten aus der Kundendatenbank die entsprechenden Sichtbarkeitseinstellungen (beispielsweise eine Einstellung "privat", bei der so wenig Daten wie möglich auf der Rechnung erscheinen) ermittelt und dem Vorgang in einem Zuweisungsschritt zugewiesen wurden. Der Hotelmitarbeiter sieht somit bei der Rechnungsstellung ebenfalls wieder nur diejenigen Kundendaten, die von dem Hotelgast zuvor freigegeben wurden. Die Bestätigung des zu zahlenden Rechnungsbetrages in einem nachfolgenden Bestätigungsschritt ebenso wie die Zahlung selbst in einem abschließenden Zahlungsschritt kann erneut durch Einsatz einer "biometrischen Kundenkarte" auf Basis eines einzigen biometrischen Datensatzes erfolgen. Somit muss der Hotelgast beim Hotelmanagementsystem der DE 10 2013 109 045 A1 nur noch ein einziges Mal eine klassische Check in-Prozedur durchlaufen.

Weiterhin sind Motels mit einer Mehrzahl nebeneinander angeordneter Gasträume, die jeweils durch eine Tür mit einem unmittelbar davor vorgesehenen überdachten Fahrzeugabstellplatz verbunden sind, seit langem bekannt. Um durch bauliche und andere konstruktive Maßnahmen die "automatisierte" Bewirtung von Gästen ohne Kontaktaufnahme zum Motelpersonal zu ermöglichen, ist es aus der DE 27 08 765 C3 bekannt, dass der Fahrzeugabstellplatz eine geschlossene Garage mit einem Tor ist, dass die Tür und das Tor mit fernsteuerbaren Verriegelungen ausgestattet sind und dass in der Garage ein Kreditwerk vorgesehen ist, dessen Betätigung für eine vorbestimmbare Zeitspanne das Tor verriegelt und die Verriegelung der Tür zum Gastraum öffnet. Im Bereitschaftszustand des Gastraums ist das Tor offen und die Tür geschlossen sowie verriegelt. Die Verriegelung der Tür zum einem zentralen Gang für Motelpersonal kann zu dieser Zeit offen sein. Ein mit einem Fahrzeug ankommender Gast kann ohne weiteres in die Garage einfahren und braucht erst dort auszusteigen. Durch Geldeinwurf betätigt er das Kreditwerk, worauf sich das Tor hinter ihm schließt und die Verriegelung des Tores wirksam wird. Gleichzeitig öffnet sich die Verriegelung der Tür zum Gastraum, und die sich zugleich schließende Verriegelung der Tür verhindert den Zugang für das Personal. Solange das Tor geschlossen und verriegelt ist, bleibt die Verriegelung der Tür geöffnet. Gegen Ablauf der vorgewählten (und bezahlten) Zeitspanne weist das Kreditwerk durch optisches und/oder akustisches Signal den Gast darauf hin, dass seine Aufenthaltszeit abläuft. Innerhalb der verbleibenden Frist kann der Gast den Gastraum und die Garage zu räumen. Tut er dies, so kann er von innen die Torverriegelung lösen und das Tor öffnen. Zugleich mit dem Öffnen der Torverriegelung wird die Verriegelung der Tür wirksam (und kann ohne neuerliche Betätigung des Kreditwerks nicht wieder geöffnet werden). Gleichzeitig öffnet sich die Verriegelung der Tür, so dass das Personal den Gastraum zu dessen Wiederherrichtung betreten kann. Zweckmäßig schließt sich das Garagentor der gerade verlassenen Einheit Gastraum/Garage nach Abreise eines Gastes wieder, damit nicht der Eindruck eines zur Aufnahme eines neuen Gastes bereiten Gastraums erweckt wird, solange der Raum nicht wieder hergerichtet wurde. Um alle Funktionen der verschiedenen Kreditwerke verfolgen zu können, insbesondere auch die Belegung der Gasträume und die Notwendigkeit ihrer Wiederherrichtung feststellen zu können, sind alle Kreditwerke mit einem zentralen Überwachungsgerät im Personal-Aufenthaltsraum des Motels verbunden. Die aus der DE 27 08 765 C3 bekannte Motelkonstruktion ermöglicht es einem Gast, einen Gastraum (Zimmer) zum Ausruhen, Umkleiden, Waschen usw. auch für nur kurze Zeit - beispielsweise einige Stunden - und zu jeder Tages- oder Nachtzeit zusammen mit der vor dem Gastraum angeordneten Garage zu mieten. Da der Gast mit dem Motelpersonal nicht in Berührung kommt, braucht er hierauf in keiner Weise Rücksicht zu nehmen. Seine Privatsphäre bleibt beim Mietvorgang ebenso wie während der ganzen Zeit der Benutzung der gemieteten Einheit Garage/Gastraum uneingeschränkt gewahrt.

In einem Drive-in werden Dienstleistungen angeboten, ohne dass der Kunde hierfür sein Auto verlassen muss. Die Anonymität des Kunden ist weitgehend gewahrt; über meist vorhandene Überwachungskameras und Aufzeichnung des Autos/Autonummer kann die Identität des Halters des Fahrzeugs jedoch nachträglich ermittelt werden. Auch lädt eine offene Gar age - wenn frei - wie bei der aus der DE 27 08 765 C3 bekannten Motelkonstruktion zum Missbrauch ein.

Die US 6 209 270 B1 befasst sich mit einem mehrstöckigen Gebäude mit Zufahrtsrampen und auf jeder Ebene eine Straße in der Mitte des Gebäudes, welches auch als Motel genutzt werden kann. Die Rampen sind vorzugsweise an einer Außenseite des Gebäudes angeordnet, vorzugsweise mit Einbahnverkehr auf gegenüberliegenden Seiten des Gebäudes. Jeder der Eingänge und / oder Ausgänge auf einer der Ebenen kann mit einer beweglichen Barriere und / oder Kommunikationssysteme versehen sein, um Sicherheitskontrollen durchzuführen und so diese Ebene als eigene Gated Community zu betreiben. Bei der Nutzung als Motel können die Gäste auf der öffentlichen Straße vor dem Hotel parken und einen Fußgänger-Eingang benutzen. Zum bequemen Check-in, Check-out kann eine Kreditkarte verwendet werden, welche auch als Zimmerschlüssel dient.

In der DE 22 48 362 A1 wird ein System zum Transport von Gütern in vielstöckigen Gebäuden offenbart, wobei darauf hingewiesen wird, dass bei der Verwendung eines Lastenaufzugs zur Versorgung von zwei benachbarten Hotelzimmern Überlegungen dahingehend angestellt werden müssen, dass sich die Türen auf beiden Seiten des Aufzugs nicht gleichzeitig öffnen können. Der Lastenaufzug besteht dabei aus einem Förderkorb, der mit Hilfe eines Seiles in dem Aufzugsschacht in bekannter Weise auf- und ab-bewegt werden kann. Das Innere des Förderkorbes ist horizontal unterteilt in eine obere und eine untere Kammer, die an ihren Böden Fließbänder aus Rollen haben. Die obere Kammer kann einen Behälter aufnehmen, der zum Servieren von Mahlzeiten dient und sich dazu eignet, Nahrungsmittel oder Getränke aufzunehmen, die einem Gast oder Gästen in den Räumen serviert werden sollen. Die untere Kammer ist dazu geeignet, den oben genannten Behälter für das Gepäck oder einen Behälter für den Wäschedienst aufzunehmen. An den beiden Enden der Rollenfließbänder sind Führungsrollen vorgesehen, die schwenkbar sind, um die Bewegung der verschiedenen Behälter u. ä. in den Aufzug und aus diesem heraus zu ermöglichen.

Schließlich offenbart die EP 2 568 421 A1 ein Verfahren, das einem Benutzer einen automatischen Zugang zu einem für ihn reservierten Ort, zum Beispiel einem Hotelzimmer, gewährt, wobei ein automatisches Türöffnungssystem installiert werden kann, so dass die Hotelzimmer beispielsweise unter Verwendung eines Smartphones geöffnet werden können. Dabei ist das Smartphone in Verbindung mit einem zentralen Reservierungssystem des Hotels. Das zentrale Reservierungssystem wiederum ist in Kommunikation mit einer Gast-Profil-Datenbank und einer Reservierungsdatenbank. Die Gast-ID wird vom zentralen Reservierungssystem zur Reservierungsdatenbank gesendet. Die Reservierungsdatenbank generiert eine Liste der Gastreservierungen, einschließlich aller erforderlichen Angaben und teilt dies dem zentralen Reservierungssystem mit. Das zentrale Reservierungssystem sendet dann die Reservierungsliste und Details zum Smartphone und das Smartphone zeigt die Reservierungsliste und Details für den Benutzer an.

Wie die vorstehende Würdigung des Standes der Technik aufzeigt, sind unterschiedlich ausgestaltete Hotels, Motels und Bewirtungsbetriebe bekannt. Jedoch fehlt in der Praxis ein Verfahren für ein entsprechend baukonstruktiv ausgestaltetes Motel, bei dem für beide Seiten ein hohes Maß an Datensicherheit verwirklicht wird, so dass die Anonymität des Kunden gewahrt bleibt.

Der Erfindung liegt - ausgehend vom Motel der DE 27 08 765 C3 - die Aufgabe zugrunde ein Drive-in Motel derart auszugestalten, dass ein anonymer Zugang, eine anonyme An- und Abmeldung sowie ein anonymer Zimmerservice für Hotels bzw. Stundenhotels geschaffen wird. Die Anmeldung (Check-In), Zimmerübergabe und Abmeldung (Check-Out) soll im Drive-in ermöglicht werden, ohne dass die Gäste hierfür das Auto verlassen müssen. Insbesondere soll die korrekte Bezahlung durch die Gäste und die unmittelbare Datenlöschung aufgezeichneter Daten danach sichergestellt werden.

Diese Aufgabe wird bei einem Drive-in Motel, gemäß dem Oberbegriff des Patentanspruchs 1, dadurch gelöst, dass das Motel einen Check-in Bereich und einen Check-out Bereich aufweist, welcher als ein nicht einsehbarer Baukörper mit jeweils zwei Toren in Durchfahrtsrichtung ausgestaltet ist und Check-in, Check-out Bereich über einen Zufahrtsweg miteinander verbunden sind, dass der Gast in den Check-in Bereich einfährt und das erste Tor des Check-in Bereichs sich schließt, dass der Gast vom Auto aus über eine Bedienungseinrichtung ein freies Zimmer auswählt und die eingegebenen Kundendaten sowie Daten von installierten Überwachungseinrichtungen als Kundendatensatz in einem Abrechnungssystem gespeichert werden und danach das zweite Tor des Check-in Bereichs und das Tor der ausgewählten Garage sich öffnen, dass nach Einfahrt in die Garage das jeweilige Tor sich wieder schließt und ein direkter Zugang vom Auto zum Zimmer besteht, dass wenn der Gast dem Motelpersonal seine Abreise mitteilt, das Tor der jeweiligen Garage geöffnet wird, wenn das zweite Tor im Check-in Bereich, das zweite Tor im Check-out Bereich und alle weiteren Tore geschlossen sind, dass der Gast über den Zufahrtsweg durch das geöffnete erste Tor in den Check-out Bereich einfährt und dieses geschlossen wird, dass nach Rechnungslegung und Bezahlung das zweite Tor im Check-out Bereich geöffnet, der Gast ausfährt und der gespeicherte Kundendatensatz automatisch gelöscht wird, wobei sich während der Fahrt im Check- in Bereich oder Check-out Bereich jeweils immer nur ein Fahrzeug befindet und wobei ein Zugriff des Motelpersonals auf den jeweiligen Kundendatensatz nicht möglich ist.

Das erfindungsgemäße Drive-in Motel weist den Vorteil auf, dass eine anonyme Nutzung und Anmietung der Zimmer über elektronische Wege erfolgen kann, ohne einen persönlichen Kontakt zwischen Gästen und Hotelpersonal zu haben. Weiterhin ist von Vorteil, dass ein Zugriff des Motelpersonals des Drive-in Motels auf den zwischengespeicherten Kundendatensatz nicht möglich sein ist (außer zur Eingabe von Daten gewählter Dienstleistungen). Durch die automatische Datenlöschung nach dem Check-out (Kennzeichen, Videoüberwachung des Ein- und Ausfahrtbereichs usw.) bleibt die Anonymität des Gastes gewahrt.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:

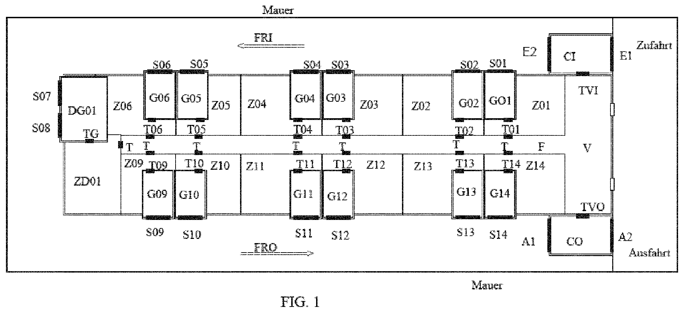

- FIG. 1: die erfindungsgemäße Baukonstruktion für die Wahrung der Anonymität des Gastes.

Die baulichen Voraussetzungen für das Ausführungsbeispiel nach FIG. 1 bestehen aus einem blickdicht eingezäunten (z.B. Mauer) Grundstück und einem Gebäude, dass mit dem Auto direkt anfahrbar ist. Das Grundstück besitzt eine oder mehrere Zufahutsmöglichkeiten von der öffentlichen Straße. Der Baukörper selbst sowie die Zufahrtsmöglichkeiten können unterschiedlicher Anordnung sein, z.B. Gebäude ringsum anfahrbar (siehe FIG. 1), oder das Gebäude ist einseitig anfahrbar, oder das Gebäude ist über Innenhof anfahrbar.

Im Einzelnen weist das Motel einen Check-in Bereich CI und einen Check-out CO Bereich auf, welcher als ein nicht einsehbarer Baukörper mit jeweils zwei Toren E1, E2 und A1, A2 in Durchfahrtsrichtung ausgestaltet ist. Der Check-in CI und der Check-out Bereich CO sind über einen Zufahrtsweg miteinander verbunden.

Der jeweilige Stellplatz / Garage G01, G02, ..., G14 ist direkt über eine Eingangstür T01, T02, ..., T14 mit dem jeweiligen Zimmer Z01, Z02, ..., Z14 verbunden. Die Anordnung der Gästezimmer Z01, Z02, ..., Z14 ist so gestaltet, dass ein Zugang über einen im Gebäude liegenden Flur F erfolgen kann (Serviceflur für Dienstleistungen und Reinigung; im Beispiel nach FIG. 1 in der Mitte).

Das Verfahren zur anonymen Nutzung und Anmietung der Zimmer Z01, Z02, ..., Z14 erfolgt vorrangig über elektronische Wege ohne einen persönlichen Kontakt zwischen Gästen und Hotelpersonal.

Der Ablauf für die An- / Abmeldung der Gäste und den Zimmerservice erfolgt vor Ort laut nachstehenden Schema.

Ablaufschema (siehe auch FIG. 1):
Check-in Bereich CI
   1. Das Tor E1 ist geöffnet, wenn Tor E2 geschlossen ist.
   2. Der Gast fährt im Auto zum Check-in Bereich CI.
   3. Das Tor E1 wird geschlossen.
   4. Der Gast wählt vom Auto aus über installierte Bedienungseinrichtungen (eine Sprechanlage oder Touchscreen-Monitor oder ähnlichem, beispielsweise Handy) eines der Zimmer Z01, Z02, ..., Z14 aus.
   5. Die Anmeldung und Rückmeldung der Zimmernummer (Z01, Z02, ..., Z14) erfolgt.
   6. Das Tor E2 öffnet sich, wenn die Tore S01, S02, ..., S14 und das Tor A1 geschlossen sind.
   7. Das Tor S01 der Garage G01 des gebuchten Zimmers Z01 wird geöffnet.
   8. Der Gast fährt in die jeweilige Garage (G01). Das Tor der Garage (G01) wird geschlossen.
   9. Direkter Zugang (T01) vom Auto / Garage (G01) zum Zimmer (Z01).
Zimmerservice
   1. Der Gast wählt vom Zimmer (ZO1, Z02, ..., Z14) aus weitere Dienstleistungen (Verpflegung, Getränke usw.).
   2. Die Bestellung erfolgt vom Zimmer (Z01, Z02, ..., Z14) aus per Telefon, Sprechanlage oder Touchscreen-Monitor.
   3. Über den mit dem Küchen-/Verwaltungs-Bereich V verbundenen Serviceflur/gemeinsamer Gang F erhält der Gast die Ware mittels einer beidseitig verschließbaren Durchreiche.
Check-out Bereich CO
   1. Der Gast teilt seine Abreise per Telefon, Sprechanlage oder Touchscreen-Monitor mit.
   2. Das Tor (S01) der jeweiligen Garage (G01) wird geöffnet, wenn Tor E2, Tor A2 und alle weiteren Tore (S02, ..., S14) geschlossen sind.
   3. Das Tor A1 ist geöffnet.
   4. Der Gast fährt im Auto zum Check-Out Bereich CO.
   5. Das Tor A1 wird geschlossen.
   6. Die Abmeldung, Rechnungslegung und Bezahlung erfolgt über Touchscreen-Monitor oder Durchreiche bzw. anderweitig sichtgeschützter Übergabe.
   7. Das Tor A2 wird geöffnet und der Gast fährt aus.

Wenn der Gast in den Check-in Bereich CI einfährt, das erste Tor E1 des Check-in Bereichs CI sich schließt und der Gast vom Auto aus über eine Bedienungseinrichtung ein freies Zimmer auswählt, werden die eingegebenen Kundendaten sowie Daten von installierten Überwachungseinrichtungen als Kundendatensatz in einem Abrechnungssystem gespeichert. Danach öffnen sich das zweite Tor E2 des Check-in Bereichs CI und das Tor, beispielsweise S01 der ausgewählten Garage (G01). Nach Einfahrt (Fahrtrichtung FRI) in die Garage (G01) schließt sich das jeweilige Tor (S01, ... S14) wieder und es besteht ein direkter Zugang vom Auto zum Zimmer (Z01). Mit dem Abrechnungssystem steht eine Steuereinrichtung in Verbindung (in der Zeichnung nicht dargestellt), welche das Öffnen und Schließen der jeweiligen Tore E, E2, S01, ..., S14, A1, A2 steuert und mit den installierten Überwachungseinrichtungen in Verbindung steht.

Wenn der Gast vom Zimmer Z01 aus weitere Dienstleistungen wählt, erhält er über den gemeinsamen Gang F die Ware mittels einer beidseitig verschließbaren Durchreiche, wobei das Motelpersonal dem Kundendatensatz die entsprechenden Rechnungsdaten hinzufügen, diesen jedoch nicht auslesen kann.

Wenn der Gast dem Motelpersonal seine Abreise mitteilt, wird das Tor (S01) der jeweiligen Garage (G01) geöffnet, wenn das zweite Tor E2 im Check-in Bereich CI, das zweite Tor A2 im Check-out Bereich CO und alle weiteren Tore (S02, ... S 14) geschlossen sind. Der Gast fährt nun über den Zufahrtsweg (Fahrtrichtung FRO) durch das geöffnete erste Tor A1 in den Check-out Bereich CO ein und dieses wird geschlossen. Nach Rechnungslegung und Bezahlung wird das zweite Tor A2 im Check-out Bereich CO geöffnet, der Gast fährt aus und der gespeicherte Kundendatensatz wird automatisch gelöscht, wobei ein Zugriff des Motelpersonals auf den Kundendatensatz nicht möglich ist. Während der Fahrt im von einer Mauer oder dergleichen umschlossenen Gelände (vom Check-in Bereich CI zur jeweiligen Garage und von der Garage zum Check-out Bereich CO) befindet sich jeweils immer nur dieses eine Fahrzeug (installierte Überwachungseinrichtungen, insbesondere Videoüberwachung, in Verbindung mit der Steuereinrichtung).

Die Erfindung ist nicht auf die dargestellten und beschriebenen Ausführungsbeispiele beschränkt, sondern umfasst auch alle im Sinne der Erfindung gleichwirkenden Ausführungen. Im Rahmen der Erfindung kann die bauliche Anordnung der Garage ebenfalls als Doppelgarage DG01 für zwei PKW mit zwei separaten Toren S07, S08 sein. Die Doppelgarage DG01 führt zu einem gemeinsamen Zimmer ZD01. Bei Buchung der Zimmer mit Doppelgarage, im in FIG. 1 dargestellten Beispiel ZD01, DG01, erhält der erste einfahrende Gast einen Buchungscode, um die damit verbundene Einfahrt eines zweiten Fahrzeugs zu ermöglichen. Alternativ kann vom ersten einfahrenden Gast ein mehrstelliger Zeichencode als Buchungscode für das zweite Fahrzeug selbst gewählt werden. Weiterhin kann eine Vorbuchung über Fernabsatzwege (Internet, App, telefonisch) vorab erfolgen, indem der Gast die Räumlichkeiten vorab über das Internet auswählen und Reservieren oder Buchen (preispflichtig) kann. Nach Abschluss des Buchungsvorgangs erhält der Gast einen Buchungscode per Email, SMS oder mobiler App. Dieser Buchungscode wird beim Check-In in das EDV-System eingegeben und der Gast bekommt Zufahrt bzw. Zugang zum gewählten (bei Terminvereinbarung, Preisaufschlag)/freien Zimmer.

Im Rahmen der Erfindung besteht die Möglichkeit, dass eine Bezahlung während des Buchungsvorgangs stattfindet; dies kann beispielsweise über Online-Bezahlmethoden (Kreditkarte, Paypal usw.) erfolgen. Bei Inanspruchnahme des Zimmers wird der angelegte Kundendatensatz wieder automatisch gelöscht.

## Patentansprüche

1. Drive-in Motel zur anonymen Nutzung und Anmietung von Zimmern mit einer Mehrzahl nebeneinander angeordneter Zimmer (ZO1, Z02, ..., Z14), die jeweils durch eine Tür (T01, T02, ..., T14) mit einer unmittelbar davor angeordneten Garage (G01, G02, ..., G14) mit einem Tor (S01, S02, ..., S14) und auf der gegenüberliegenden Seite durch eine weitere Tür (T) mit einem gemeinsamen Gang (F) verbunden sind, **dadurch gekennzeichnet, dass** das Motel einen Check-in Bereich (CI) und einen Check-out Bereich (CO) aufweist, welcher als ein nicht einsehbarer Baukörper mit jeweils zwei Toren (E1, E2 und A1, A2) in Durchfahrtsrichtung ausgestaltet ist und Check-in (CI), Check-out Bereich (CO) über einen Zufahrtsweg miteinander verbunden sind, dass der Gast in den Check-in Bereich (CI) einfährt und das erste Tor (E1) des Check-in Bereichs (CI) sich schließt, dass der Gast vom Auto aus über eine Bedienungseinrichtung ein freies Zimmer (ZO1, Z02, ..., Z14) auswählt und die eingegebenen Kundendaten sowie Daten von installierten Überwachungseinrichtungen als Kundendatensatz in einem Abrechnungssystem gespeichert werden und danach das zweite Tor (E2) des Check-in Bereichs (CI) und das Tor (S01, ... S14) der ausgewählten Garage (G01, G02, ..., G14) sich öffnen, dass nach Einfahrt in die Garage (G01, G02, ..., G14) das jeweilige Tor (S01, ... S14) sich wieder schließt und ein direkter Zugang (T01, T02, ..., T14) vom Auto zum Zimmer (Z01, Z02, ..., Z14) besteht, dass wenn der Gast dem Motelpersonal seine Abreise mitteilt, das Tor (S01, ... S14) der jeweiligen Garage (G01, G02, ..., G14) geöffnet wird, wenn das zweite Tor (E2) im Check-in Bereich (CI), das zweite Tor (A2) im Check-out Bereich (CO) und alle weiteren Tore (S01, ... S14) geschlossen sind, dass nach Rechnungslegung und Bezahlung das zweite Tor (A2) im Check-out Bereich (CO) geöffnet, der Gast ausfährt und der gespeicherte Kundendatensatz automatisch gelöscht wird, wobei sich während der Fahrt im Check- in Bereich (CI) oder Check-out Bereich (CO) jeweils immer nur ein Fahrzeug befindet und wobei ein Zugriff des Motelpersonals auf den jeweiligen Kundendatensatz nicht möglich ist.

2. Motel nach Anspruch 1, **dadurch gekennzeichnet, dass** der Gast vom Zimmer (Z01, Z02, ..., Z14) aus weitere Dienstleistungen wählt und über den gemeinsamen Gang (F) der Gast die Ware mittels einer beidseitig verschließbaren Durchreiche erhält und dass das Motelpersonal dem Kundendatensatz die entsprechenden Rechnungsdaten hinzufügen, diesen jedoch nicht auslesen kann.

3. Motel nach Anspruch 1, **dadurch gekennzeichnet, dass** das Abrechnungssystem mit einer Steuereinrichtung in Verbindung steht, welche das Öffnen und Schließen der jeweiligen Tore (E, E2, S01, ... S14, A1, A2) steuert und überwacht.

4. Motel nach einem der Ansprüche 1 bis 3, **dadurch gekennzeichnet, dass** die Garage als Doppelgarage (DG01) für zwei PKW mit zwei separaten Toren (S07, S08) ausgestaltet ist und zu einem gemeinsamen Zimmer (ZD01) führt und dass bei Buchung der Zimmer mit Doppelgarage (DG01) der erste einfahrende Gast einen Buchungscode erhält, um die damit verbundene Einfahrt eines zweiten Fahrzeugs zu ermöglichen, oder vom ersten einfahrenden Gast ein mehrstelliger Zeichencode als Buchungscode für das zweite Fahrzeug selbst gewählt werden kann, wobei der jeweilige Buchungscode zwischengespeichert und über das Abrechnungssystem zur Steuereinrichtung übermittelt wird.

5. Motel nach einem der Ansprüche 1 bis 4, **dadurch gekennzeichnet, dass** durch den Gast eine Vorbuchung über Fernabsatzwege vorab erfolgen kann, indem der Gast die Räumlichkeiten (ZO1, Z02, ..., Z14) vorab über die Internetseite des Motels auswählen und dort direkt Reservieren oder Buchen kann und dass nach Abschluss des Buchungsvorgangs der Gast einen Buchungscode per Email, SMS oder mobiler App. erhält.

6. Motel nach Anspruch 5, **dadurch gekennzeichnet, dass** vom Gast eine Bezahlung während des Buchungsvorgangs mittels Online-Bezahlmethoden erfolgt.
